(19) Europäisches Patentamt
European Patent Office
Office européen des brevets

(11) **EP 4 209 981 A1**

(12) **EUROPEAN PATENT APPLICATION**

(43) Date of publication:
**12.07.2023 Bulletin 2023/28**

(21) Application number: **22151007.6**

(22) Date of filing: **11.01.2022**

(51) International Patent Classification (IPC):
*G06Q 20/06* (2012.01)    *G06Q 40/04* (2012.01)

(52) Cooperative Patent Classification (CPC):
**G06Q 20/065; G06Q 40/04**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Robert Bosch GmbH
70442 Stuttgart (DE)**

(72) Inventor: **Poddey, Alexander
75446 Wiernsheim (DE)**

(54) **VULNERABILITY DETECTION FOR EXCHANGE FUNCTION UPDATING IN A CRYPO CURRENCY**

(57)    Some embodiments are directed to a computer-implemented method for determining a vulnerability in a new exchange function for use in a cryptocurrency system. An attack amount of crypto tokens of the first type (413) and a first attack amount of crypto tokens of the second type (414) may be obtained, wherein the attack amount of crypto tokens of the first type (413) can be obtained according to a first creation exchange function (410) in exchange for the first attack amount of crypto tokens of the second type (414). A second attack amount of crypto tokens of the second type (433) is obtainable in exchange for the attack amount of crypto tokens of the first type (413). If the second attack amount of crypto tokens of the second type (433) exceed the first attack amount of crypto tokens of the second type (414) by more than a threshold, a vulnerability is found.

Fig. 2c

**Description**

**TECHNICAL FIELD**

The presently disclosed subject matter relates to a computer-implemented method of determining a vulnerability in a new exchange function for use in a cryptocurrency system, a server device, a client device, and a computer readable medium.

**BACKGROUND**

A decentralized transaction system, transaction database or distributed ledger is any protocol in computer networks that brings about consensus regarding its transactions and their sequence. A common form of such a system is based on a blockchain and forms the basis of many so-called cryptocurrencies. In a cryptocurrency, cryptographic tokens are distributed across multiple clients. The clients can transfer the tokens among each other, or to and from a market maker. Cryptography and distributed ledger systems ensure that a transfer cannot easily be forged or repudiated.

International patent application WO 2019/043668 A1 discloses a known blockchain, in this case, to track cryptocurrency tokens. Transactions related to the tokens, such as token creation or destruction are visible on the blockchain.

A distributed ledger such as a blockchain provides a secure transfer system. This allows, e.g., tokens of a first type to be exchanged for tokens of a second type. Colloquially, a token of the first type is bought, and has a price as an amount of tokens of the second type. Advanced cryptocurrencies use a mechanism known as "curved bonding", according to which a function known as a bonding curve is algorithmically defined, which influences the price of units (tokens) of the currency depending on the current supply of tokens. Price is used loosely here to indicate the tokens that are exchanged, which do not necessarily have a monetary value. A token may represent any limited resource, e.g., access to computation resources or the like, and the cryptocurrency may be used to regulate access.

The known system discloses managing a cryptocurrency with curved bonding. In the known method, a plurality of users are provided with an in- marketplace wallet, suitable for storing linked digital tokens that are linked in value to cryptocurrency tokens and that are required to transact on a digital marketplace platform. A cryptocurrency reserve is provided suitable for storing a plurality of cryptocurrency tokens. In response to a user purchasing linked digital tokens from a marketplace store, linked digital tokens are transferred to the in- marketplace wallet of the user and an equivalent value of cryptocurrency tokens are transferred to the cryptocurrency reserve. In response to a user withdrawing a number of linked digital tokens from the in-marketplace wallet of the user, the desired number of linked digital tokens is removed from the user's in- marketplace wallet and an equivalent value of cryptocurrency tokens is transferred from the cryptocurrency reserve to an out-of- marketplace wallet of the user, the out-of- marketplace wallet suitable for storing cryptocurrency tokens outside of the marketplace platform.

Figure 10 of the cited patent application shows a graph illustrating how bonding of tokens may be applied. Token bonding is used to introduce a hierarchy of tokens which are fundamentally related to each other. Token bonding is a means of token generation with a predefined price-supply relationship or bonding curve. This may be achieved through a smart contract: users deposit a reserve currency into the smart contract address, and in turn receive newly-minted tokens. The deposit may be locked up, to be returned to sellers of the token at a later date. The price the user pays per token may be dictated by the aforementioned curve. At any point, users may be able to exchange their minted tokens for the original reserve currency at a price dictated by the same curve. Sell and buy curves may be distinct.

For an additional x tokens to be purchased, the smart contract may look up the appropriate point on the curve based on existing circulating supply and determine the amount to be paid in the native token for the bundle of x tokens to be generated. A similar process may be provided for selling tokens which destroys these tokens by removing them from circulation and moving the total token supply backward along the bonding curve. Since the token may be 100% collateralized, the system may provide enough reserve currency stored to compensate the sold tokens. The known bonding curve is defined as $f(x) = \frac{x}{c(a+x^b)}$, where a > 0 and 0.5 < b < 1; c > 1

The integral of this function involves the evaluation of a hypergeometric function, which does not have a closed form.

**SUMMARY**

Using bonding curves are a preferred way to regulate the exchange between two limited resources, while on the other hand still providing flexibility to adapt the system to the particular demands of any particular application.

On the other hand a fixed bonding curve in itself introduces an inflexibility. A typical problem is that through accruing fees by a market maker, in a so-called pool, itself a result of a buy-sell spread which may be introduced to avoid front-running attacks on the system. One way to deal with the surfeit of tokens of the second type, beyond what is needed to cover the first type tokens, is to increase the bonding curve used for annulment.

Unfortunately, if the latter bonding curve is increased, this opens a window for an attacker. He/she can convert a large amount of tokens of the second type before the update into first type tokens, and after the update convert them back. Embodiments provide a test to verify if a proposed update will introduce this vulnerability.

The problem occurs more generally in any cryptocurrency system in which first type tokens and second type tokens can be exchanged against each other, regardless of whether it uses bonding curves or not; For example, a cryptocurrency system supporting creating and annulling of first type tokens, using exchange function(s) to calculate the amount of second type tokens corresponding to a creation or annulment transactions.

For example, in a method, one computes from the first exchange function an attack amount of crypto tokens of the first type obtainable in exchange for the first attack amount of crypto tokens of the second type according to the security parameter, then computes from the second annulling exchange function a second attack amount of crypto tokens of the second type obtainable in exchange for the computed attack amount of crypto tokens of the first type. Given the second attack amount of crypto tokens of the second type and the first attack amount of crypto tokens of the second type one can verify if there is a scope for an attack on the system. In particular, if the second attack amount of crypto tokens of the second type exceeds the first attack amount of crypto tokens of the second type, especially if the former exceeds the latter by a lot, e.g., more than a threshold. A small exceeding can often be tolerated as executing the attack may not be fully efficient, e.g., other parties send their create or annulment orders while the attack is ongoing.

If the new exchange functions are found not to have the vulnerability, they can be implemented, e.g., if a distributed ledger is used, a description of the second creation exchange function and/or second annulling exchange function can be posted in a block of the distributed ledger.

If the new exchange functions do have a vulnerability, one can search for another one that does not. One way to do the update without running the risk of creating a vulnerability, is to do the update in several steps.

For example, a third annulling exchange function may be selected intermediate between the first annulling exchange function and the second annulling exchange function. The third annulling exchange function can be analyzed for the vulnerability.

An aspect is a method for maintaining crypto tokens of the first type. An aspect is a system for maintaining crypto tokens of the first type. For example, the system may comprise one or more server devices and one or more client devices. An aspect is a method for maintaining crypto tokens of the first type for use on a server device. An aspect is a method for maintaining crypto tokens of the first type for use on a client device.

An embodiment of the method may be implemented on a computer as a computer implemented method, or in dedicated hardware, or in a combination of both. Executable code for an embodiment of the method may be stored on a computer program product. Examples of computer program products include memory devices, optical storage devices, integrated circuits, servers, online software, etc. Preferably, the computer program product comprises non-transitory program code stored on a computer readable medium for performing an embodiment of the method when said program product is executed on a computer.

In an embodiment, the computer program comprises computer program code adapted to perform all or part of the steps of an embodiment of the method when the computer program is run on a computer. Preferably, the computer program is embodied on a computer readable medium.

Another aspect of the presently disclosed subject matter is a method of making the computer program available for downloading.

**BRIEF DESCRIPTION OF DRAWINGS**

Further details, aspects, and embodiments will be described, by way of example only, with reference to the drawings. Elements in the figures are illustrated for simplicity and clarity and have not necessarily been drawn to scale. In the figures, elements which correspond to elements already described may have the same reference numerals. In the drawings,

Figure 1a schematically shows an example of an embodiment of a client device,
Figure 1b schematically shows an example of an embodiment of a server device,
Figure 1c schematically shows an example of an embodiment of a cryptographic token system,
Figure 2a schematically shows an example of an embodiment of a first creation exchange function,
Figure 2b schematically shows an example of an embodiment of a first annulling exchange function,
Figure 2c schematically shows an example of an embodiment of a system for verifying exchange functions for a cryptocurrency system,
Figure 2d schematically shows an example of an embodiment of a system for verifying exchange functions for a cryptocurrency system,

Figure 3a schematically shows an example of an embodiment of a bonding curve,

Figure 3b schematically shows an example of an embodiment of a bonding curve,

Figure 3c schematically shows an example of an embodiment of a bonding curve,

Figure 4 schematically shows an example of an embodiment of updating a bonding curve,

Figure 5 schematically shows an example of an embodiment of a blockchain,

Figure 6 schematically shows an example of an embodiment of a method for maintaining crypto tokens of a first type,

Figure 7a schematically shows a computer readable medium having a writable part comprising a computer program according to an embodiment,

Figure 7b schematically shows a representation of a processor system according to an embodiment.

**Reference signs list**

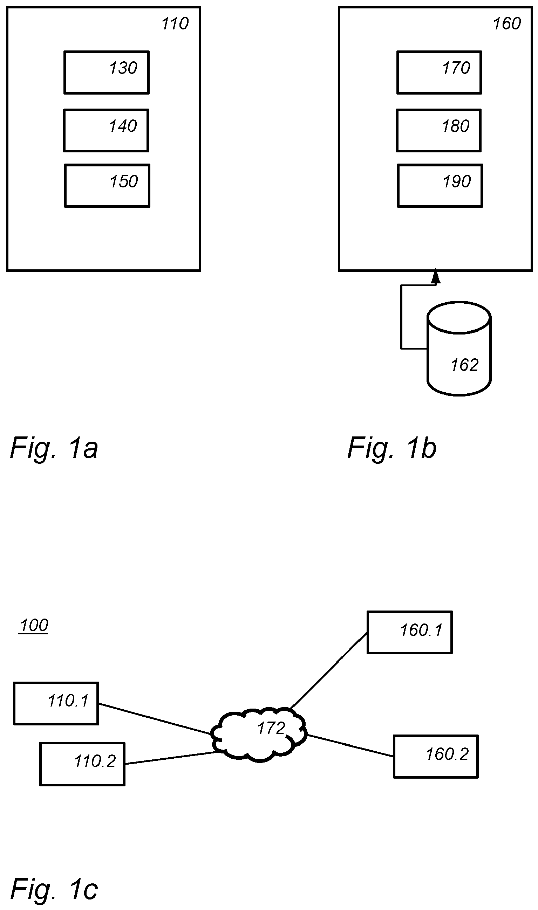

The following list of references and abbreviations corresponds to figures 1a-5, 7a, 7b, and is provided for facilitating the interpretation of the drawings and shall not be construed as limiting the claims.

| | |
|---|---|
| 100 | a crypto token system |
| 110, 110.1, 110.2 | a client device |
| 130 | a processor system |
| 140 | a storage |
| 150 | a communication interface |
| 160, 160.1, 160.2 | a server device |
| 162 | a database |
| 170 | a processor system |
| 180 | a storage |
| 190 | a communication interface |
| 172 | a computer network |
| 410 | a first creation exchange function |
| 411 | a creation amount of crypto tokens of the first type |
| 412 | an amount of crypto tokens of the second type |
| 420 | a first annulling exchange function |
| 421 | an annulling amount of crypto tokens of the first type |
| 422 | an amount of crypto tokens of the second type |

| | |
|---|---|
| 413 | an attack amount of crypto tokens of the first type |
| 414 | a first attack amount of crypto tokens of the second type |
| 430 | a second annulling exchange function |
| 433 | a second attack amount of crypto tokens of the second type |
| 440 | a comparing unit |

| | |
|---|---|
| 210 | a blockchain |
| 211-215 | a block |
| 220 | a smart contract |
| 221 | a create procedure |
| 222 | an annulment procedure |
| 223 | an update procedure |
| 231-234 | a state |
| 241-242 | a crypto token transactions |
| 251-253 | a point in time |
| 301 | a bonding curve |
| 311 | an amount of crypto tokens of the first type |
| 312 | an amount of crypto tokens of the second type |
| 313 | an amount of crypto tokens of the second type |
| 314 | an amount of crypto tokens of the second type |
| X1, X2 | an amount of crypto tokens of the first type |
| 315 | current supply of crypto tokens of the first type |
| 330 | state information |
| 321-323 | curve segment parameters |
| 324-326 | curve segment parameters |

| 1000, 1001 | a computer readable medium |
| --- | --- |
| 1010 | a writable part |
| 1020 | a computer program |
| 1110 | integrated circuit(s) |
| 1120 | a processing unit |
| 1122 | a memory |
| 1124 | a dedicated integrated circuit |
| 1126 | a communication element |
| 1130 | an interconnect |
| 1140 | a processor system |

## DESCRIPTION OF EMBODIMENTS

While the presently disclosed subject matter is susceptible of embodiment in many different forms, there are shown in the drawings and will herein be described in detail one or more specific embodiments, with the understanding that the present disclosure is to be considered as exemplary of the principles of the presently disclosed subject matter and not intended to limit it to the specific embodiments shown and described.

In the following, for the sake of understanding, elements of embodiments are described in operation. However, it will be apparent that the respective elements are arranged to perform the functions, e.g., procedures, being described as performed by them.

Further, the subject matter that is presently disclosed is not limited to the embodiments only, but also includes every other combination of features described herein or recited in mutually different dependent claims.

**Figure 1a** schematically shows an example of an embodiment of a client device 110. **Figure 1b** schematically shows an example of an embodiment of a server device 160.

The server device 160 is configured to determine a vulnerability in a new exchange function for use in a cryptocurrency system. Server 160 may also be configured to maintain crypto tokens, e.g., a cryptocurrency, e.g., create and annul crypto tokens of a first type in exchange for crypto tokens of a second type. This is however not necessary, server 160 may also be configured to analyze an exchange function that is to replace an existing exchange function in the crypto currency system, while server 160 leaves the actual managing of the currency to another server device.

Likewise, client device 110 may also, or instead, be configured to determine a vulnerability in a new exchange function for use in a cryptocurrency system. Client device 110 may also, or instead, be configured to maintain crypto tokens, e.g., managing wallets to keep tokens of the first type and of the second type.

For example, server device 160 may be configured to receive a creation request for creating tokens of the first type, or an annulment request for annulling tokens of the first type, or an update request to update an exchange function. In response, server device 160 may include data reflecting the transaction(s) in a new block on a distributed ledger, e.g., on a blockchain. The information included in a block may reflect the transaction, showing that a user obtained the tokens or that the tokens were removed from the user, or state information of the contract, e.g., including a new bonding curve definition or a new current supply, etc. The information may show that the tokens are no longer valid.

First type tokens are created or annulled in exchange for second type tokens. The amount of second type tokens is determined by an exchange function. The exchange function takes as input the amount of first tokens that is to be created, and the current supply size, e.g., the current amount of first type tokens in existence. The exchange function produces as output the amount of second type tokens that are to be exchanged for the amount of first type tokens. An exchange function is increasing in both inputs, or at least non-decreasing; e.g., as the current supply increases so does the required amount of second type tokens.

Typically, a different exchange function is used for creation request then for annulment requests, e.g., a creation exchange function and an annulment exchange function. For the same inputs, the creation exchange function is configured to give a higher output than the annulment exchange function. This is referred to as the spread, or the buy-sell spread. A spread makes front-running attacks on the crypto currency harder.

An advantageous way to implement an exchange function is to use a bonding curve. In case of two exchange functions, a creating bonding curve for creation requests, an annulling bonding curve for annulling request. The exchange function may then be defined as the integral of the bonding curve between the current supply size and the new supply size. A bonding curve is typically a non-decreasing function.

In practice, it can happen that an exchange function needs to be updated. A particular example of this, is to increase the annulment exchange function. It is not necessary that an annulment exchange function is increased over the entire range of the current supply size. For example, in a typical embodiment, the annulment exchange function increases for low values of the current supply size, e.g., starting at 0, but not for higher values, e.g., above a threshold.

After the update of the annulment exchange function one would get more second type tokens in exchange for the same amount of first type tokens (assuming the current supply size is in a region where the annulment exchange function increased).

If the annulment exchange function is increased it may be necessary to also increase the creation exchange function, to maintain that the latter is larger than the former for all inputs. It may not be necessary to change the creation exchange function, e.g., if the annulment exchange function is increased such a small amount that it does not surpass the creation exchange function.

When the annulment exchange function is about to be updated, a window may be created in which an attacker can attack the system. By investing a large amount of second type tokens before the update and exchanging the received first type tokens after the update, an attacker can extract value from the crypto system. This is undesirable. Server 160 is configured to detect if such an opportunity exist.

For example, 160 may obtain an update for the annulment exchange function, and given the current supply size and the existing creation exchange function, server 160 can determine if the vulnerability exist. If server 160 is also configured to maintain the crypto currency, e.g., to process creation and annulment requests, the server 160 has actual information on the current supply size, and can thus give a more accurate estimation of the possibility of the vulnerability.

In an embodiment, the crypto currency is maintained using a distributed ledger. For example, records of the creation, annulment and transfer of the crypto tokens may be kept in blocks of the distributed ledger.

Server 160 may also be configured to maintain the distributed ledger. For example, the server may be configured as a so-called miner. The server device is sometimes referred to as a miner, or mining device, or as a minter, or minting device. For example, server 160 may be configured to generate a new block for the distributed ledger; the new block including a selected set of transactions. The transactions may be selected by the server device from transactions that it received. Some amount of cryptographic tokens may be assigned to the miner for creating the block. For example, tokens may be a cryptocurrency. For example, the cryptocurrency may be associated with the distributed ledger. In particular, the second type crypto tokens may be associated to a particular distributed ledger, e.g., the cryptocurrency may be bitcoin, ether, or the like. This is not necessary, for example, the second type tokens may be associated with a different distributed ledger than used for the first type tokens, or with no distributed ledger at all.

Server device 160 may be configured to obtain a smart contract from a distributed ledger, e.g., a blockchain. The smart contract may implement a creation procedure to fulfill creation requests, an annulment procedure to fulfill annulment requests, and so on. The smart contract may also comprise an update procedure for updating the exchange function(s). The update procedure may also implement code for verifying if a particular vulnerability exists, e.g., as part of a larger scan for vulnerabilities.

Server 160 may be configured to execute the corresponding computer code in the smart contract. Instead of a smart contract, the procedures may be implemented in conventional software, e.g., in the so-called chain logic. The data maintained by the software may be written on the distributed ledger regardless of the origin of the software, e.g., smart contract or not. For example, a transaction showing the creation, annulment, or transfer of a token, or of the update of the exchange functions, may be put on the distributed ledger. An updated supply size may be put on the distributed ledger. An updated exchange function, e.g., an updated bonding curve, may be put on the distributed ledger, etc.

Also client device 110 may be configured to determine if a new exchange function can be attacked. For example, a client device may be used by a governor of the crypto currency system and if a satisfactory exchange function(s) is found, it can be sent to a server device for replacing the existing exchange function(s). Typically, such an update request will be authenticated, e.g., comprise an authentication token that shows that the update request is from an authorized user, e.g., the governor. An update request may also, or instead, be approved if a sufficient number of server devices agrees with the update.

For example, Client device 110 may send an update request to update the bonding curve(s). Again, it may be required that an update request is linked to a particular identity, e.g., signed by a particular private key.

For example, client device 110 may also, or instead, be configured to maintain a wallet. For example, the client device 110 may be configured to send a transaction request to server device 160, e.g., to transfer tokens of the first type, to create tokens of the first type or to annul tokens of the first type, etc. Typically, the first type tokens and/or second type tokens may be transferred to or from the wallet maintained by the client device.

A transaction, when processed, is typically reflected in a block on the distributed ledger. Server device 160 may also have access to a wallet, possibly by execution of a procedure of a smart contract.

Client device 110 may comprise a processor system 130, a storage 140, and a communication interface 150. Server device 160 may comprise a processor system 170, a storage 180, and a communication interface 190. Storage 140 and 180 may be electronic storage. The storage may comprise local storage, e.g., a local hard drive or electronic memory, e.g., a flash memory. Storage 140 and 180 may comprise non-local storage, e.g., cloud storage. In the latter case, storage 140 and 180 may comprise a storage interface to the non-local storage. Storage may comprise multiple discrete memories together making up storage 140, 180. Storage may comprise a temporary memory, say a RAM.

Server device 160 may have access to a database 162. Database 162 may comprise a copy of a distributed ledger, e.g., as far as is available to server device 160. Given the distributed nature of distributed ledgers it may happen that some other server device has more blocks in its copy of the distributed ledger, or that the last block or last few blocks are different. Such differences will be resolved in time due to the distributed trust system of distributed ledgers. Database 162 is preferably local, and may be used in creating new blocks, and in verifying or validating blocks of other server devices. Database 162 may also be located in the cloud.

Database 162 may be used to determine an attack parameter, which is used in the check on vulnerabilities. The attack parameter may also be given or fixed.

Client device 110 and server device 160 may be part of a crypto token system, e.g., crypto token system 100. Client device 110 and server device 160 may communicate internally, with other systems, external storage, input devices, output devices, and/or one or more sensors over a computer network. The computer network may be an internet, an intranet, a LAN, a WLAN, etc. The computer network may be the Internet. The system comprises a connection interface which is arranged to communicate within the system or outside of the system as needed. For example, the connection interface may comprise a connector, e.g., a wired connector, e.g., an Ethernet connector, an optical connector, etc., or a wireless connector, e.g., an antenna, e.g., a Wi-Fi, 4G or 5G antenna.

The communication interface 150 may be used to send or receive digital data, e.g., transaction requests to create or annul cryptographic tokens; said procedure may be part of a smart contract. The communication interface 190 may be used to send or receive digital data, e.g., transaction requests to create, annul or transfer cryptographic tokens. The communication interface 190 may be used to communicate with other server devices, e.g., to distribute a new block of a blockchain, or to synchronize transaction requests. For example, a new exchange function(s), in particular a new annulling exchange function, may be received at a communication interface, e.g., to do verify the absence of a vulnerability. For example, a new exchange function(s), in particular a new annulling exchange function, may be send from a communication interface, e.g., after is has been verified not to have a vulnerability.

The execution of devices 110 and 160 may be implemented in a processor system, e.g., one or more processor circuits, e.g., microprocessors, examples of which are shown herein. The processor system may comprise one or more GPUs and/or CPUs. Devices 110 and 160 System 100 may comprise multiple processors, which may be distributed over separate locations. For example, devices 110 and 160 may use cloud computing.

The devices 110 and 160 may comprise functional units that may be functional units of the processor system. For example, the functional units shown may be wholly or partially implemented in computer instructions that are stored at the device, e.g., in an electronic memory of the device, and are executable by a microprocessor of the device. In hybrid embodiments, functional units are implemented partially in hardware, e.g., as coprocessors, e.g., cryptographic coprocessors, and partially in software stored and executed on the device.

Typically, the client device 110 and server device 160 each comprise a microprocessor which executes appropriate software stored at the system; for example, that software may have been downloaded and/or stored in a corresponding memory, e.g., a volatile memory such as RAM or a non-volatile memory such as Flash. Alternatively, the systems may, in whole or in part, be implemented in programmable logic, e.g., as field-programmable gate array (FPGA). The systems may be implemented, in whole or in part, as a so-called application-specific integrated circuit (ASIC), e.g., an integrated circuit (IC) customized for their particular use. For example, the circuits may be implemented in CMOS, e.g., using a hardware description language such as Verilog, VHDL, etc. In particular, client device 110 and server device 160 may comprise circuits, e.g., for the cryptographic processing, and/or arithmetic processing.

A processor circuit may be implemented in a distributed fashion, e.g., as multiple sub-processor circuits. A storage may be distributed over multiple distributed sub-storages. Part or all of the memory may be an electronic memory, magnetic memory, etc. For example, the storage may have volatile and a non-volatile part. Part of the storage may be read-only.

**Figure 1c** schematically shows an example of an embodiment of a cryptographic token system. System 100 comprises multiple client devices; shown are client device 110.1 and 110.2. System 100 comprises multiple server devices; shown are server device 160.1 and 160.2. The devices are connected through a computer network 172, e.g., the Internet. The client and server device may be according to an embodiment. The client devices may cooperate among each other to transfer cryptographic tokens of the first type. The client devices may interact with a server device to create, to annul, or transfer a cryptographic token of the first type, e.g., from a first wallet to a second wallet.

For example, a server device may update the exchange function, and distribute this information to the other parties, server devices, and client devices, possibly through a block on a distributed ledger. For example, a client device may send a server device an update request, possibly including the updated exchange functions, or requesting the server device to select an updated exchange functions while ensuring that no vulnerabilities are introduced.

A client device may request a server device to execute a creation procedure to create new tokens of a type of cryptocurrency, possibly in exchange for cryptographic tokens of the second kind, e.g., tokens of another type of cryptocurrency. A client device may request a server device to execute an annulment procedure to annul tokens of the first type of cryptocurrency, possibly in exchange for tokens of the second type of cryptocurrency. Creation is also sometimes referred to as a buying, while annulment is sometimes referred to as destroying or selling.

For example, any of the client devices may request creation or annulment of first token request. The request typically comprises an amount of first type tokens that are to be created or annulled.

When fulfilling a creation request, e.g., by a server such as server 160, new cryptographic tokens of the first type are created. Said first type tokens can be transferred to a wallet, e.g., an address, e.g., of a client device, e.g., the device that made the creation request. In exchange, another type of cryptographic tokens, e.g., of a second type are transferred away from the client device. For example, the second type tokens may be transferred to a pool, e.g., a wallet or address that is under the control, or under partial control of server 160. When first type tokens are later annulled, e.g., destroyed, then second type tokens can be returned. The pool in which second type tokens are kept, e.g., a wallet, may be associated with the smart contract or other software that implements the creation and annulment procedures. The pool and the procedure associated with it, e.g., the creation, annulment, etc., procedures are sometimes referred to as the marked maker.

The relationship between the amount of first type tokens that are created or annulled and the amount of second type tokens that are taken or returned is defined by one or more exchange functions, which in turn may be defined using one or more bonding curves. There may be a single bonding curve, but preferably a creating bonding curve and an annulling bonding curve are used. The creation curve lies above the annulment curve, e.g., to make frontrunning attacks harder. Even if two bonding curves are used, they may still be derived from a single bonding curve, e.g., by adding or subtracting fee terms.

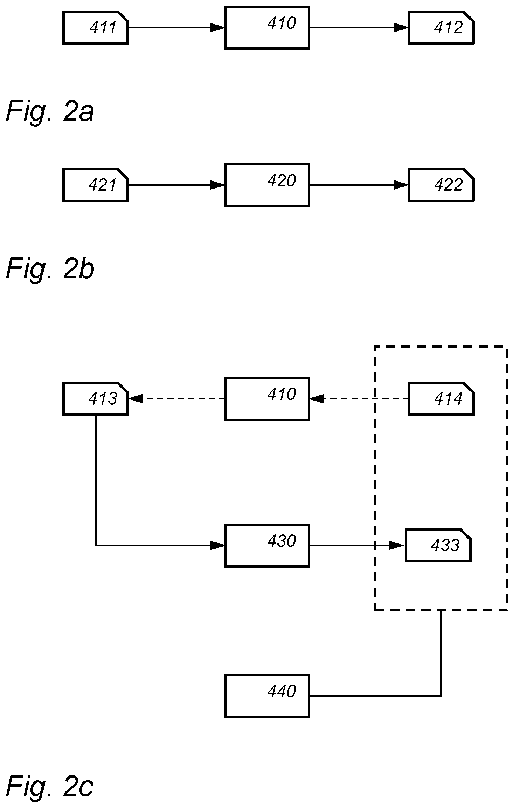

Figures 2a-2c illustrate various embodiments of systems, devices, and methods according to an embodiment. Figures 2a and 2b illustrate the use of exchange function in normal operation. A server device may be configured to implement function according to figures 2a and 2b, or may not be, e.g., may cooperate with a further server devices that does. Figure 2c illustrates how a server device may analyze an exchange function for possible vulnerabilities. Figure 2c may also be implemented by a client device.

The functionality illustrated with respect to any one of figures 2a-2c, or parts thereof, may be implemented in software. Such software may be software private to a computer, e.g., a server device. The software may be part of the software that implements a distributed ledger, sometimes referred to as chain software or chain logic. The software may be implemented in a so-called smart-contract. The smart-contract may be obtained from a distributed ledger.

**Figure 2a** schematically shows an example of an embodiment of a first creation exchange function 410.

The first creation exchange function 410 takes as input a creation amount of crypto tokens of the first type. That is the amount of first type tokens that are to be created. Creating a token may, e.g., be done by binding it to a particular address, e.g., a particular wallet, in a block of a distributed ledger. In exchange, an amount of crypto tokens of the second type 412 is transferred away from the requesting party. This amount is given by the exchange function.

The exchange function typically also depends on the current supply of first type tokens. This input is not shown separately in figure 2a.

For example, in addition to computing the amount of second type tokens 412, to fulfill a creation request a server device may also maintain the current supply size, e.g., by increasing it with the currently created amount of first type crypto tokens. The new supply may be posted in a block of the distributed ledger.

**Figure 2b** schematically shows an example of an embodiment of a first annulling exchange function. Similar to creation requests, first type tokens can be annulled, e.g., exchanged back for second type tokens. Figure 2b shows a first annulling exchange function 420.

As with figure 2a, given an annulling amount of crypto tokens of the first type 421, the annulling exchange function exchanges this for an amount of crypto tokens of the second type 422. For example, the first type tokens may be invalidated, e.g., removed from circulation, e.g., as defined in a block of the distributed ledger. The second type tokens may be transferred to an address indicated by the requester, e.g., a wallet associated to him. Also in this case the current supply size may be maintained, in this case, by decreasing it with the amount of annulled tokens.

A server device configured to receive and process creation and/or annulment requests, may also be configured to replace the first creation exchange function with a second creation exchange function and/or the first annulling exchange function with a second annulling exchange function. Preferably, it has been verified that the replacement will not impose a vulnerability on the system. For example, before implementing the replacement the server may perform a test as in an embodiment. A problem with this approach is that some server may accept the update while another may reject it depending on the exact state of their distributed ledger-the final few blocks of a distributed ledger may differ among different miners. An alternative is that once an update has been approved, all server devices perform the update, without further checks. For example, a majority of server devices may approve the update, or a governor may approve the update, e.g., as evinced by an authentication token.

**Figure 2c** schematically shows an example of an embodiment of a system for determining a vulnerability in a new exchange function for use in a cryptocurrency system. For example, such a system may be embodied in a server device, e.g., a server device configured according to figures 2a or 2b. Functions illustrated in figure 2c may also be implemented in a server device without the server device itself supporting crypto currency functions, e.g., processing of creation, annulment, or transfer requests.

Shown in figure 2c, is a first attack amount of crypto tokens of the second type 414. The first amount 414 is a security parameter. The higher the security parameter is chosen the stricter the protection against exploitation is, during the upcoming update. First amount 414 is an estimation of the amount of second type tokens that an attacker can use for his attack. The attack comprises using the first amount 414 to buy up an attack amount of crypto tokens of the first type 413. After the update, when the annulment exchange function 420 is replaced by a new annulment exchange function 430, the attack amount of crypto tokens of the first type 413 are exchanged back for second type tokens again, that is, a second attack amount of crypto tokens of the second type 433.

If the first attack amount 414 is large enough, and/or the increase in annulment exchange function is large enough, the update is vulnerable to attack. In particular, if the second attack amount of crypto tokens of the second type 433 is more than the first attack amount of crypto tokens of the second type 414, then performing this attack is profitable. In practice, it may be sufficient if the gain for the attacker is small enough, e.g., less than a threshold. Since there will be other parties creating and annulling tokens, the attacks is usually not quite as successful as possible, so it may be acceptable to allow a theoretical small gain for the attacker. For example, a server device configured to detect the vulnerability may have a processing system configured for comparing, e.g., in the form of a comparing unit 440. The comparing may comprise comparing the second attack amount of crypto tokens of the second type 433 with the first attack amount of crypto tokens of the second type 414 according to the security parameter, determining a vulnerability if the former exceeds the latter by more than a threshold.

For example, an embodiment of a method for determining a vulnerability in a new exchange function for use in a cryptocurrency system, may comprise obtaining a second annulling exchange function for replacing the first annulling exchange function, obtaining a security parameter comprising a first attack amount of crypto tokens of the second type, computing from the first exchange function an attack amount of crypto tokens of the first type obtainable in exchange for the first attack amount of crypto tokens of the second type according to the security parameter, computing from the second annulling exchange function a second attack amount of crypto tokens of the second type obtainable in exchange for the computed attack amount of crypto tokens of the first type, and comparing the second attack amount of crypto tokens of the second type with the first attack amount of crypto tokens of the second type according to the security parameter, determining a vulnerability if the former exceeds the latter by more than a threshold.

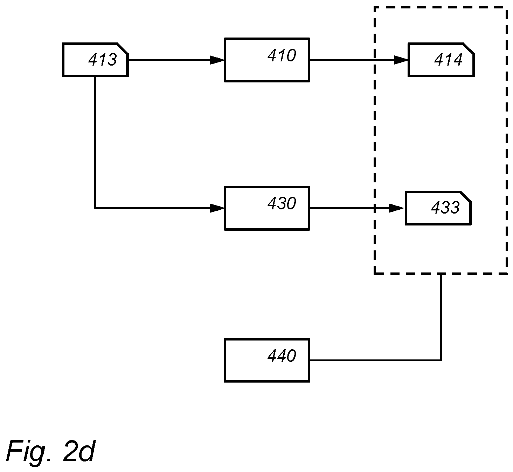

**Figure 2d** schematically shows an example of an embodiment of a system for verifying exchange functions for a cryptocurrency system.

In the embodiment of figure 2c, the vulnerability is assessed by first obtaining an amount of second type tokens 414 that an attacker might have available to him or her to perform the attack. In the figure 2c embodiment, an amount of first type tokens is then calculated by inverting first creation exchange function 410. Note that a closed form inverse is typically is not available, so that the inverse value may have to be found by an approximation algorithm, e.g., binary search or the like.

An alternative approach is shown in figure 2d. In the figure 2d embodiment, the amount of first type tokens 413 that may become available to the attacker is estimated, rather than the amount of second type tokens. For example, amount 413 may be estimated as the volume of first type tokens involved in transactions in some timeframe, or a multiple of the volume. Estimating amount 414 as in figure 2c has the advantage that it is closer to what an attacker might actually do and thus might give a more accurate interpretation of vulnerability. For example, if estimating amount 413 directly is not done carefully, an unrealistically high amount 414 may be obtained, e.g., if the bonding curve increases strongly in some region. On the other hand, the approach illustrated with figure 2d has the advantage that it is not needed to invert the first creation exchange function 410.

Regardless how one obtains attack amounts 414 and 433, there are various ways in which a server device configured to verifying the vulnerability may obtain the second annulling exchange function 430 for analyzing.

Typically, the second annulling exchange function 430 will be obtained together with a second creating exchange function. Typically, if the annulling exchange function is increased, the creation exchange function also needs increasing. This is not necessary though, if the increase of function 430 is moderate, it may stay under the creating bonding curve, thus decreasing the spread. For verifying the vulnerability discussed above, it is not necessary to have access to the creation exchange function. However, having both functions allows further validation of the functions.

The second annulling exchange function 430 may be obtained in the form of an annulling bonding curve, or in the form of a universal bonding curve, both for creating and annulling from which the annulling bonding curve can be derived. Examples of bonding curves are given herein.

For example, the second annulling exchange function may be determined by the same device that performs the check. For example, it may be predetermined that if the amount of second type tokens in a pool associated with the crypto currency becomes too large, the exchange functions may be updated. The amount of increase, or the moment of increasing may also be predetermined. For example, they may be predetermined in software such as a smart contract or in chain logic, etc.

Selecting a new exchange functions is typically done by selecting a new bonding curve, though this is not necessary for the system, as other functions that determine the exchange rate may be used instead. For example, an exchange function may comprise a mathematical formula, which might not comprise integrating a curve.

When updating a bonding curve, various conditions may be taken into account as desired by the system.

Typically, a bonding curve is non-decreasing. Usually, a bonding curve asymptotically converges to a value, though this is not necessary, as the bonding curve could also diverge. Usually the bonding curve is continuous and differentiable.

Another option is for the second annulment exchange function to be sent to the server device. For example, an external computer may determine the second annulment exchange function, and typically also the second creation exchange function, and send it to the server device. For example, the new functions may be sent to more than one server device, even all of them. A server device may perform a verification of the exchange function to determine if it will support it. If a sufficiently large moiety of the server devices supports the new exchange function(s), they may be adopted. A sufficiently large moiety may be, e.g., a majority, a super majority, or all server devices, or a majority of stake and so on.

The new exchange functions may also be indicated in software, e.g., in a smart contract or the like. In that case, the server device already has the new exchange functions. Even if the new exchange functions have long ago been predetermined it might not have been possible to perform all security checks, since it is not known at compile-time what the current supply size will be when the update takes place; likewise it may not be known what the security parameter should be, as it may depend on the distributed ledger's history.

If exchange function(s) are proposed for adoption, they may optionally be posted in a block of the distributed ledger. All server devices will be able to see what new exchange functions are proposed. The trust mechanism of the distributed ledger provide immutability to the proposed function.

If a server approves the function, he can optionally post the approval in a block of the distributed ledger. The approval may be given in the form of a signed message or the like.

Once a new exchange function is approved, e.g., according to some agreement procedure, the new exchange functions may also be included in a new block of the distributed ledger. This provides immutability, and is also transparent for users of the system.

An exchange function may be specified with a bonding curve. In fact, both the creating bonding curve and the annulling bonding curve may be derived from a single universal bonding curve. Typically, there is a spread between the creation and the annulling bonding curve. For example, a bonding curve may be equal to the creation curve with the addition of fee terms, the latter may be positive for creation and negative for annulment.

A bonding curve may be defined by parameters. This is advantageous as it uses little data. Moreover, if the bonding curve allows a closed form primitive, then this can also be expressed in the parameters. This allows quick integration of the bonding curve which is especially important for on-chain computation such as in done in smart contracts. In an embodiment, the bonding curve has a closed form primitive, expressed in parameters.

For example, a bonding curve may be defined using, e.g., splines, line segments, polynomials, polynomial segments. For example, the bonding curve may be defined a multiple connected curve segments.

A security parameter and the first attack amount of crypto tokens of the second type 414 contained therein, may be obtained in various ways. The security parameter may be received from an external computer, e.g., together with the new exchange functions. The security parameter may be computed by the device itself. For example, the first attack amount of crypto tokens of the second type 414 can be estimated from the volume of crypto tokens of the second type that are involved in creation and/or annulling operations as shown in the distributed ledge, e.g., in a timeframe. The amount of tokens that is involved in a distributed ledger gives an indication of the amount of second type tokens that are under the control of the users of the distributed ledger. For higher security, the timeframe may be increased, and/or the volume may be increased, e.g., multiplied with a factor, e.g., 2, 3, 10, etc., possibly with some minimal volume, e.g., 10, 100, 10000 second type tokens. A realistic amount depend on the particular type of second type tokens.

Once the first attack amount 414 has been obtained, the server device needs to verify how many first type tokens can be obtained therefor. This is not directly clear, as typically the creation exchange function might not have an easy inverse. This can be resolved by estimating the first attack amount 413, for example, using binary search, a first attack amount 414 can be found. When first creation exchange function 410 is applied to the estimated first attack amount 413, the result should be the first attack amount. Note that the first creation exchange function 410 typically has an additional input, the current supply size of first type tokens. It might not be possible or easy to exactly obtain a first attack amount 413 so that exactly the first attack amount 414 is used. This is not necessary though, for example, an overshoot and/or undershoot may be acceptable within a threshold.

To indicate that the first creation exchange function might not be directly applicable to the first attack amount 414, the corresponding arrows are dashed in figure 2c.

Next the new annulment exchange function 430 can be applied to first attack amount 413 to obtain the second attack amount 433. Note that when first exchange function 410 was applied, this was done with the current supply size, or at least a value in its proximity. But when the second exchange function 430 is used, a supply size is used, as if, the first attack amount 413 of first type tokens had been created. That is the additional input, the supply size, will be higher, probably significantly higher, when applying function 430.

Finally, the first and second attack amounts of the second type (414 and 430) are compared. If they indicate that a sufficiently significant gain can be made by an attacker, the new exchange function is considered to have a vulnerability.

Note that in many circumstances, it may not be a secret when the exchange function will be updated. For example, the new exchange functions may be subject to debate, e.g., a private debate amongst governors, possibly even a public debate. For example, the new exchange functions may be sent ahead to mining devices, e.g., for approval, or for installation prior to their use. Any of those that are involved may trigger the attack.

If a vulnerability is determined, e.g., from the comparison, the second creation exchange function 430 may be rejected. If no vulnerability is determined, replacing the first creation exchange function and the first annulling exchange function with the second creation exchange function and second annulling exchange function.

There can be various follow-ups after a vulnerability has been determined. For example, in a search for an acceptable second annulling exchange function, a new function may be considered until no vulnerability is found anymore. A clever way to update the annulment exchange function but to reduce the risk, is to perform the update in two or more steps. For example, in an embodiment one can obtain a third annulling exchange function, e.g., select it, which is intermediate between the first annulling exchange function and the second annulling exchange function. As the increase of the annulment exchange function is lower, the likelihood of a vulnerability is also lower.

In addition to the particular vulnerability illustrated above, other problems with a bonding curve can also be detected. In an example, a new exchange function and in particular a new set of exchange functions, may be scanned for multiple vulnerabilities. For example, a verification procedure may also verify one or more of the following

- that the creation exchange function exceeds the annulment exchange function for every value of the current supply size and number of token that are to be created / annulled.
- that an annulment of all existing first type tokens would not exceed the size of a pool associated with the system, e.g., with a market maker.
- that the spread between creation exchange function and annulment exchange function is sufficient to avoid front running attacks,
- that creation exchange function and annulment exchange function are increasing in the current supply size and in the number of tokens created,
- that the creation exchange function and annulment exchange function are sufficiently flat in the current supply size parameter, etc.

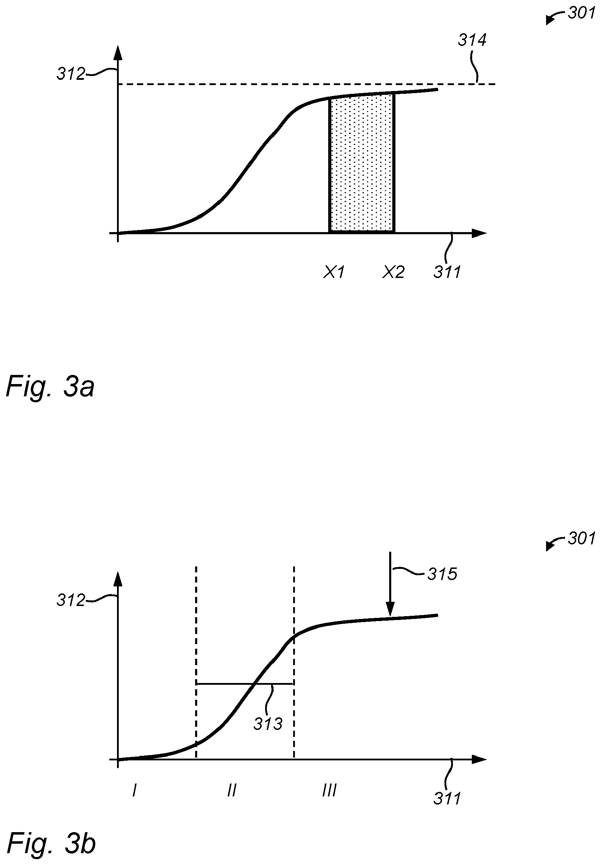

**Figure 3a** schematically shows an example of an embodiment of a bonding curve 301. Figure 3a illustrates how a creation exchange function, e.g., such as in figure 2a, might work.

On the x-axis 311 is the amount of crypto tokens of the first type. On the y-axis 312 is the amount of crypto tokens of the second type.

Suppose the supply of tokens of the first type is currently X1, and the first user wants to obtain (X2-X1) tokens, so that the new supply will become X2, e.g., execution of a creation procedure. To determine the amount of tokens of the second type that are to be exchanged, one integrates a function from X1 to X2. In case of creating tokens, this function may be referred to as the creation function. Typically, a bonding curve is increasing or at least non-decreasing.

Note that two inputs are needed to compute the amount of second type tokens, e.g., X1 and X2, or X1 and (X2-X1), or the like.

Figure 3a can also be seen as an illustration of figure 2b. For example, suppose the supply of tokens of the first type is currently X2, and the first user wants to annul (X2-X1) tokens of the first type, so that the new supply will become X1. To determine the amount of tokens of the second type that are to be received, one integrates a function from X1 to X2. In case of annulling tokens, this function may be referred to as the annulling bonding curve.

In an embodiment, a single bonding curve is used, though typically two bonding curves are used-one for creation requests, sometimes referred to as the creating bonding curve, and one for annulment requests, sometimes referred to as the annulling bonding curve. The creating bonding curve is higher than the annulment curve. This is sometimes referred to as the spread, or the buy-sell spread. A spread is useful for discouraging front running attacks.

When the bonding curves are updated, so are the exchange functions that are derived from them. Preferably, the exchange functions derived from the bonding curves are analyzed for a vulnerability as in an embodiment before using them in the cryptocurrency system.

Computing an amount of first type tokens, such as amount 413 from an amount of second type tokens, such as amount 414 may be done using an approximating algorithm, which may comprise a binary search for the amount of first type tokens. For example, a lower estimate of the amount and an upper estimated may be maintained. For example, the lower estimate may initially set at the current supply size. A mid-point between the lower estimate and the upper estimate can then be evaluated by computing the integral from the current supply to the mid-point. If the integral is lower than the indicated second amount, then the mid-point replaces the lower estimate, and the upper estimate otherwise. This process can be iterated until an estimate is found for which the amount of second type tokens is sufficiently close to the indicated amount, e.g., within a threshold.

For example, a threshold may be a percentage, e.g., of the first amount, an absolute amount, or the like. A suitable threshold depends on the system. For example, a threshold may be 0.01, or 1% or the like. Hybrids are possible.

Note that X1 and X2 may be integral numbers, but this is not necessary. Tokens may also be created and annulled in fractions of integer tokens. A new state written to the ledger may include that the new supply of tokens is X2.

For example, tokens of the first type may be a new type of token created according to an embodiment, e.g., to facilitate some new application that requires token management. This could range from shops, to games, to services, to dating applications. Tokens of the second type are typically existing tokens that can be transferred digitally. For example, the tokens of the second type may be bitcoin or ether, or the like. For example, tokens of the first type may be created to regulate access to a computing resource. A user may acquire such tokens and exchange them for the access to computing resource. On the other hand, if the user has no present use for the computing resource, he/she may return the first type tokens in return for second type tokens.

The bonding curve is typically only used when creating or annulling tokens with respect to the market maker. The tokens of the first type could be transferred on a secondary market as well, and in theory the tokens may be exchanged for whatever the parties agree to. However, as both parties also have the option to obtain tokens from the market maker, or to have them annulled by the market maker, the bonding curve will have a strong influence on the secondary market. One motivation to use bonding curves is to avoid large price fluctuations.

The bonding curve may have an S-shape, or sigmoidal shape, e.g., as shown in figure 3a. When supply on the x-axis is low, the tokens can be obtained easily. When the market is mature, the price typically converges to a value 314. This is not needed, though. Instead, of convergence, e.g., the price increase may be much flatter than in a middle part of figure 3a. A sigmoidal shape is not necessary though. For example, a bonding curve may have a bend-up shape.

In an embodiment, the bonding curve that is integrated, e.g., the creating bonding curve or the annulling bonding curve, can be represented as a sum of terms. The first term may be a universal bonding curve that applies both to creation and to annulment. Typically, the bonding curve term is the major term, e.g., larger than the other terms. For example, the creating bonding curve may be equal to the universal bonding curve plus a positive fee, while the annulling bonding curve may be equal to the universal bonding curve plus a negative fee.

In known systems, the bonding curve is the only term, this would work in the sense that tokens of the first or second types can reliably be exchanged for tokens of the second of first type, but these systems are vulnerable to an attack known as front-running. If an attacker can influence the order in which orders are processed, or the order in which his order is processed relative to other orders, he/she can artificially ensure that the order receives a favorable treatment.

To mitigate this risk, the function that is integrated can include, in addition to the bonding curve a fee term. The fee term makes front running less favorable, or even unfavorable.

In an embodiment, the fee term comprises a multiple of the bonding curve shifted over an amount of crypto tokens of the first type, e.g., $s_{fr}$. For example, if the bonding curve is $\Gamma(x)$, then the shifted bonding curve may be $\Gamma(x + s_{fr})$ or $\Gamma(x - s_{fr})$. The fee term may also comprise the bonding curve $\Gamma(x)$ itself. For example, fee terms may be a difference of such terms or a multiple thereof. That is, a positive fee term may be of the form $\gamma(\Gamma(x + s_{fr}) - \Gamma(x))$, in which y is a number, e.g., a real number, e.g., a number between 0 and 1, e.g., 0.5, or the like. The difference $dl = \Gamma(x + s_{fr}) - \Gamma(x)$ may also be weighted in other ways, e.g., with an exponent, $dl^{\gamma}$, or in a polynomial, $P(dl)$ and so on. The difference term $dl$ is representative for the flatness of the binding curve around x. For example, the creating bonding curve may be $\Gamma(x) + ydl$. For example, the annulling bonding curve may be $\Gamma(x) - ydl$.

An advantage of including a term like $\gamma(\Gamma(x + s_{fr}) - \Gamma(x))$ in a fee term, is that the fee term is small if the supply size is large. That is, if the system is mature and the bonding curve is quite flat, then only small gains can be made with frontrunning, but if the system is not yet mature and the bonding curve is steep then the fee is large and frontrunning is correspondingly less favorable.

In an embodiment, the creating bonding curve or an annulling bonding curve is derived from a bonding curve as a linear combination of one or more of the bonding curve ($\Gamma(x)$), a shifted bonding curve ($\Gamma(x + s_{fr})$; $\Gamma(x - s_{fr})$) and an optional constant. There may be multiple shifts, e.g., a linear combination of $\Gamma(x)$, $\Gamma(x + s_1)$, $\Gamma(x + s_2)$ and 1.

Speaking generally, second type tokens may be transferred to and from a pool, which is under control of the system, e.g., which is associated with system software, e.g., a smart contract, chain software, and so on. With creation request the pool fills up, with annulment request the pool is depleted.

In case of creation or annulling, maintaining the current supply may comprise increasing or decreasing the current supply size with the corresponding amount of crypto tokens of the first type. The second amount of crypto tokens of the second type may be transferred to or from the pool to or from an address indicated in the creation or annulment request.

Creation requests may be executed by a creation procedure. Annulment requests may be executed by an annulment procedure. These procedures may be implemented in software. The software may be chain software, e.g., running on server device. For example, a server device may be configured with such software, e.g., during an installation procedure. In an embodiment, the creation procedure and/or annulment procedure is implemented by a smart contract. For example, a server device may be configured to obtain a smart contract from a distributed ledger. The smart contract implements a creation procedure for processing a creation request and implementing maintaining the current supply size, and/or an analogous annulment procedure.

A client device may maintain a wallet for first type tokens. For example, first type tokens may be transferred here, e.g., deposited here, in case of a creation request. For example, tokens in associated with this wallet may be removed, e.g., invalidated, in case of an annulment request. A client device may maintain a wallet for second type tokens. For example, second type tokens may be deposited here in case of an annulment request. For example, tokens in associated with this wallet may be transferred from this wallet in case of a creation request.

It is advantageous for a client device to connect to a system in which exchange functions can be updated without fear of certain attacks.

For completeness, **Figure 3b** schematically shows an example of an embodiment of a bonding curve as may be used when the market is in its infancy. Shown are three phases, sometimes called regimes. In a first regime I, tokens of the first type are created. Although the bonding curve indicates that tokens of the second type should be exchanged for them, to fill a pool this is not done in regime I. For example, these tokens may be used as an incentive for early investors, inventors, and the like. In a second phase, or regime II, tokens of the first type are exchanged for tokens of the second type. However, instead of the price indicated by the bonding curve, a constant price 313 is used. The price is chosen such that at the end of regime II, the size of the pool (in tokens of the second type) is as large as the integral of the bonding curve up to the end of regime II. Regime II may for example, be used to start-up the system. For example, early investors may perform this task. In regime III, the prices follow the bonding curve as indicated above. Should the supply drop from regime III into the part of the curve for regime II or I, then the normal prices as indicated by the bonding curve are used. Various refinements are possible. For example, the system may refuse to annul tokens if that would cause the supply to drop between a certain amount. Two bonding curves may be used, etc.

In an embodiment, the market maker, e.g., in a state on the distributed ledger maintains a current supply of first type tokens. For example, figure 3b shows at 315 the current supply of tokens. If first type tokens are created, the amount of second type tokens needed for it is obtained by integrating the curve starting from point 315 to the right; that is toward higher supply as tokens are created. If first type tokens are annulled, the amount of second type tokens offered in return is obtained by integrating the curve starting from point 315 to the left; that is toward lower supply as tokens are destroyed.

A bonding curve may be defined by parameters. This has advantages, as it reduces the amount of data that needs to be stored, e.g., on the distributed ledger, e.g., in the smart contract or with an update of the bonding curve. A bonding curve may also be defined off-chain, e.g., in chain logic. Preferably, the integral of the bonding curve can be expressed in terms of the parameters, e.g., as a function taking the parameters as input. This reduces the amount of on-chain computation. For example, a bonding curve may be defined as one or more splines, line segments, polynomials, polynomial segments.

In an embodiment, the bonding curve is defined by multiple curve segments. The multiple segments are concatenated and together define the bonding curve. This has the advantage that different equations can be used for the different curve segments. If one function were used to define the entire curve, then this would be a complicated function to accommodate the desired shape of the curve. Such a complicated function is hard to integrate. On the other hand, when segments are used, one would integrate along the segment or segments that defines that part of the bonding curve. The segments are easier to define, and preferably have a closed form primitive.

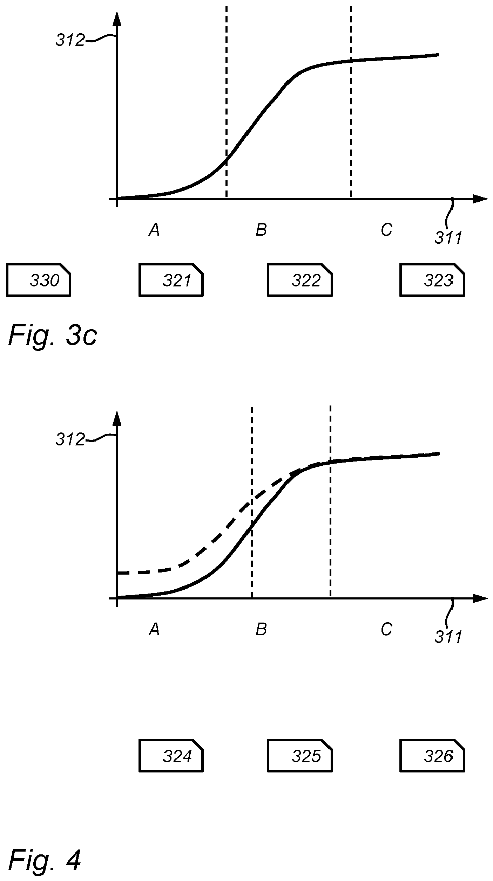

**Figure 3c** schematically shows an example of an embodiment of a bonding curve. Shown in figure 3c are three curve segments: segments A, B and C. Using curve segments are a convenient way to encode a bonding curve in a smart contract and the like.

In each curve segment the bonding curve is defined by one or more parameters. For example, parameters 321 define segment A, parameters 322 define segment B, and parameters 323 define segment C. The parameters 321-323 may be included in the state, especially if the bonding curve is updatable. Also shown in figure 3c is supply 330, that is the amount of tokens of the first type that are currently in existing, e.g., the sum of successful creation requests minus the sum of successful annulment requests.

A convenient way to define the curve segments is to use polynomials. The parameters 321-323 may comprise the coefficients of the polynomials. The exponents in polynomials are integral. The curves may be defined by so-called generalized polynomials, e.g., sums of the terms of the form $ax^b$, wherein $b$ may be non-integer, though, typically, rational. Generalized polynomials share with regular polynomials, that they can be integrated easily and in closed form. Polynomials can be conveniently expressed in the form of Bezier splines.

In experiments, it was found that using three curve segments and polynomials of degree 3 (cubic polynomials) worked well; a bonding curve can be defined with fewer, e.g., 2 curve segments, or with more than 3 curve segments. The polynomials degree can be varied as well.

It is possible that the segments, e.g., segment A, B, and C, follow the same division as the regimes I, II and III, but this is not necessary. On the contrary, it was found that flexibility in choosing where segments start and end can allow a better fit. For example, segment A can be larger than regime I, while segment B, may be smaller than regime II.

Regime III may start before segment C. Where the best points for starting and ending segments may depend on the fitting of the curves.

A fee term may also be expressed as a function, which may be defined similarly, e.g., using one or more curve segments defined by parameters, e.g., polynomial parameters. An advantage of expressing the fee term in terms of the bonding curve, e.g., as a linear combination of shift(s) of the bonding curve, is that no new set of parameters is needed, except possibly for the amount of shift. The shift may be predetermined, e.g., hard coded, e.g., part of the chain logic. The shift may be configurable, e.g., part of a state saved on the blockchain. This shift may be dynamic, e.g., determined from past transactions, e.g., past transaction as visible on the ledger.

For example, if a bonding curve on a segment is defined by parameters, e.g., in case of a polynomial, generalized polynomial and the like, the integral can also be expressed using said parameters. The approximation algorithm thus does not need to repeatedly compute or estimate an integral, but can use the closed form integral expression in terms of the parameters.

For example, a particular versatile way to define bonding curves, e.g., on segments, is to use polynomials, e.g., Bezier splines

**Figure 4** schematically shows an example of an embodiment of updating a bonding curve.

There can be several reasons why a bonding curve may need to be changed after the smart contract has been defined. A typical reason is that the amount of crypto tokens of the second type in the pool changed, and is not equal to the amount of crypto tokens indicated by the integral of the bonding curve.

For example, in a two bonding curve system, e.g., in which creation will gain the market maker more tokens than annulment costs, the market maker may gradually have more tokens of the second type available than the integral of the bonding curve represents.

The tokens of the second type that are accrued by a buy-sell spread may be collected by the market maker, e.g., in the same wallet as the pool, or in a separate wallet. If all or part of the additional tokens are added to the pool, the integral of the bonding curve may be lower than the new amount in the pool.

In a typical embodiment, the pool balance always reflects the integral value, at least once in operation and/or general trading, e.g., when in regime III. The update function may change the bonding curve such that the new integral indicates, e.g., equals, the new pool balance. For example, the marked maker may be constructed such that the integral value and pool balance can never be different; so that one only updates both together, accordingly.

The tokens of the second type that are accrued by a buy-sell spread may be collected by the market maker, e.g., in the same wallet as the pool. For example, the market maker may have a wallet, a subset of which holds the pool balance, which may exactly reflect the integral, e.g., after the system is in general operation. A second subset of the market maker's wallet could hold further value, e.g., an income generated by the market maker. In this case, the value of the wallet may be different from the integral and from the pool balance, though the latter two may be perfectly balanced. For example, changing the pool balance may be done by calling an update function which would adapt the pool balance and curve shape together, transferring value to or from the pool balance part of the wallet. The pool balance may be defined as the amount indicated by the integral of the bonding curve, e.g., the integral from supply zero to current supply. In an embodiment, it is guaranteed that the amount in the wallet is at least as high as the integral indicates. If multiple bonding curves are used, the annulling bonding curve may be used to compute the pool balance.

The tokens of the second type that are accrued by a buy-sell spread may also or instead be collected separately. For example, a creating bonding curve may be a percentage over the annul bonding curve. For each creation transaction the surplus may be collected. For example, a second pool, e.g., a second wallet of the market maker may collect the fees. At some point, the fees in the second pool, or part thereof, may be added to the first pool. In this case, the pool becomes larger than the integral of the bonding curve suggests, which may be corrected by refitting the bonding curve.

Shown in figure 4 is a bonding curve as a solid line, and an updated curve as the dashed line. The increase of the dashed line may give rise to attacks, depending e.g., on the spread. This can be analyzed as in an embodiment.

The updated bonding curve has new parameters. In figure 4, these are shown as parameters 324, 325 and 326. As it happens the number of parameters is the same in this example, although the number of segments can also be changed.

In an embodiment, the bonding curve, in particular, the annulling bonding curve, is updated under the constraint that the integral over the updated second bonding curve up to the current supply size is less or equal to the amount of crypto tokens of the second type in the pool. Before the updating function is called, the pool may be increased or decreased, by adding or removing second type tokens from it. The updated functions may be analyzed for vulnerabilities. If such are found, the updated functions may be implemented in two or more steps, with smaller increases to reduce the risk of vulnerability.

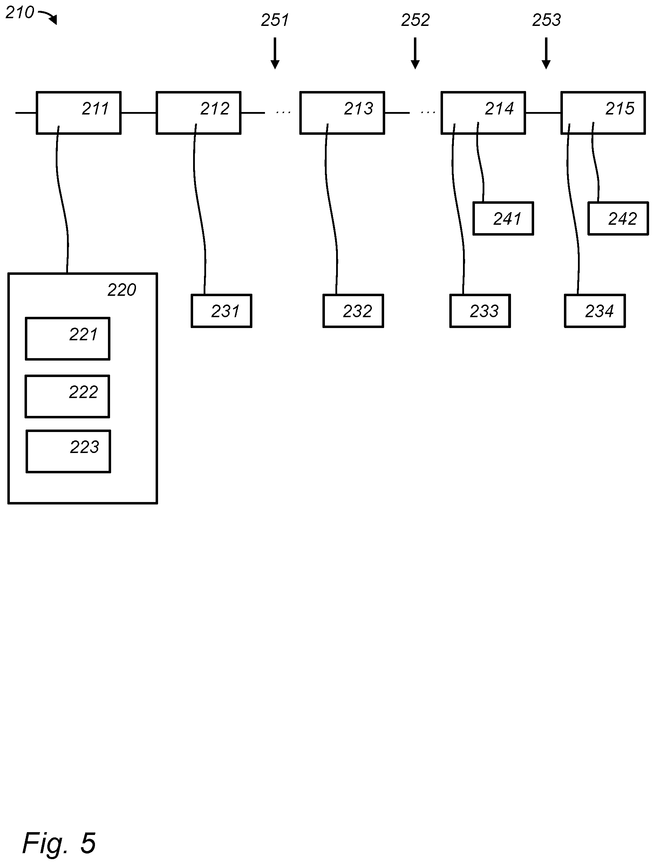

**Figure 5** schematically shows an example of an embodiment of a blockchain 210. Blockchains are particular example of distributed ledgers that has shown to work well in embodiments. Other examples of distributed ledgers can also be used. For example, in an embodiment the distributed ledger may be a hash graph, a tangle or a lattice. The distributed ledger comprises multiple blocks, which are linked to each other. The blocks may comprise transactional data and metadata. The metadata may comprise linking information and a consensus mechanism. Embodiments are primarily described with reference to a blockchain, but such an embodiment could be changed to use another type of distributed ledger, in particular a graph based one.

Blockchain 210 comprises multiple blocks, which are linked to each other in a sequence. For example, the linkage may comprise a consensus mechanism. For example, such a mechanism may be a proof of work, e.g., as in Bitcoin. The mechanism may be a proof of stake. A consensus mechanism allows distributed trust in the distributed ledger. Other consensus mechanism, e.g., as known in the art may be used in an embodiment.

To aid the discussion, figure 5 shows three points in the blockchain: points 251, 252, and 253, corresponding to three moments in time. At point 251, blocks up to block 213 have been created, but not yet block 213. At point 252, blocks up to block 214 have been created, but not yet block 214. At point 253, blocks up to block 215 have been created, but not yet block 215.

Show in blockchain 210 are multiple blocks, in this case, 5 blocks: blocks 211, 212, 213, 214, and 215. There may be more or fewer blocks. A block may comprise data related to the distributed ledger mechanism, e.g., consensus data, but also other information. In particular a block may comprise transactions, in which tokens are bound to an address, e.g., related to the public key of a client, e.g., as incorporated in a client device. Blocks may also include other information.

A block in the distributed ledger is created by a miner who has capability to create the consensus information, whether it is proof of stake or proof of work or the like. Typically, a miner, e.g., a server device, receives multiple transactions, e.g., directly from user or from other miners that share transactions they received with each other. From the received transactions a selection is made, which in turn is included in the new block of the distributed blockchain. A part of the total amount of cryptocurrency tokens that is associated with the new block, e.g., tokens minted by the creation of the block itself, and the transaction fees associated with the included transactions, may be transferred to the miner, e.g., in the very block just mined.

The distributed ledger may implement a cryptocurrency. For example, the creation of new blocks may also create new crypto tokens of the cryptocurrency. The miners typically receive all or part of the newly minted cryptocurrency. The crypto tokens are linked to a particular cryptographic identity, e.g., address or cryptographic key.

Interestingly, once a distributed ledger exists further cryptographic currencies can be created using it, e.g., by using a smart contract. For example, a block in the distributed ledger may comprise a smart contract. Block 211 shows an example, in the form of a smart contract 220. A smart contract is typically written in a computer language. An example of a computer language that is optimized for smart contracts is solidity. For example, in an embodiment blockchain 210 may be the Ethereum blockchain, and the smart contract may be written in solidity. It is not required to restrict to a particular language or blockchain though. For example, the Ethereum blockchain may be used as described in the paper "Ethereum: a secure decentralised generalised transaction ledger," by G. Wood, e.g., the Istanbul version 80085f7 of 2021-07-11.

For example, in an embodiment, a server configured to maintain crypto tokens of a first type may be configured to obtain the smart contract from the distributed ledger. For example, the smart contract may be stored in a block of the distributed ledger. The smart contract may implement the needed procedures, e.g., a creation procedure for creating the crypto tokens of the first type and an annulment procedure for the annulment of crypto tokens of the first type. The smart contract may also implement an update procedure. The smart contract may be configured to maintain the current supply size. The smart contract may define a bonding curve.

In an embodiment, blockchain 210 is used to create and annul cryptographic tokens of a first type. Colloquially, creating new cryptographic tokens is sometimes referred to a 'buying' the tokens; annulling a cryptographic token is sometimes referred to as 'selling' the tokens.

The smart contract implements multiple procedures, including at least a create procedure 221 and an annulment 222 (also called a sell procedure). Optionally, the contract may implement an update procedure 223. Colloquially, the create procedure is also called a buy procedure and the annulment procedure 222 a sell procedure. This is not entirely accurate as typically the tokens no longer exist once they are annulled. The total supply of tokens decreases after an annulment action. The annulment procedure is also referred to as a destroy procedure.

The server executes the create procedure and as a result obtains a new state. For example, the new state may reflect the increased number of crypto tokens of the first type that are now in existence (referred to as the supply). The server may also obtain a transaction that indicates that the new cryptographic tokens are transferred to the first user, and/or a transaction that indicates that the existing cryptographic tokens of the second type are transferred from the first user to a wallet associated with the smart contract. The smart contract is an example of a market maker. An amount of second type tokens may be kept in reserve by the market maker, e.g., in wallet. This part of the wallet is referred to as the pool or pool balance. The same wallet may be used to hold tokens not part of the pool. One may also reserve use of this wallet for only the pool.

The server client writes on the blockchain, e.g., includes in a block, the new state, and the new crypto tokens of the first type, the transferred crypto tokens of the second type are written on this or another blockchain. Tokens of the first type and the state may be put on separate blockchains as well.

Suppose a first user wants to buy a number of crypto tokens of a first type. He/she sends a request through a client device to a server device. The request may be sent to multiple server devices. The request may include, e.g.,

◦ the amount of crypto tokens of a first type reserved for buying first type crypto tokens.
◦ an address to bind the crypto tokens of a first type to.

For example, consider that the request is sent at point 252, just before block 214 is created.

The server device retrieves the smart contract 220 from the blockchain. The smart contract uses a state which may be updated. The server device retrieves the current state from the blockchain. Blockchain 210 shows states 231 and 232 before point 252, so that the server device retrieves state 232.

To determine the amount of cryptographic tokens of the first type (x) that are exchanged for an amount of cryptographic tokens of the second type (y), colloquially referred to as the price, the smart contract uses a bonding curve.

The smart contract may comprise a definition of the bonding curve. The definition of the bonding curve may also be in a state. The definition of the bonding curve may be the smart contract, until a new definition in a written state overrides it. Note that a bonding curve is typically increasing or at least is non-decreasing. If multiple bonding curves are used, then for this creation request, a creating bonding curve would be used.

In an embodiment, the smart contract is not stored in a block but is accessible to the server through other means; for example, the smart contract may be obtained before executing said procedures. Using a smart contract may have the advantage that a proof of execution, e.g., of any particular procedure, can be placed on the distributed ledger. Note that even if a smart contract is not placed on the chain, it can still be executed as one, provided other miners have access to its code.

In fact, the procedures need not even be implemented in a smart contract but may be implemented in conventional software. For example, such software may be obtained by the server before execution. The software may be part of the chain logic software that defined the mining operation.

In an embodiment, the market maker, e.g., the smart contract or other software, could be part of the chain-application layer. A user may call the procedures like in a smart contract.

If no smart contract is used, the wallet or pool associated with the smart contract may be replaced with a wallet or pool associated with the market maker, e.g., with the software that implements the cryptocurrency.

For example, if the annulment request is received at point 253, then block 215 may comprise a new state 234, e.g., comprising the new supply, and transaction(s) 242.

If no smart contract is used, the pool may be associated with the market maker.

The result of the create or annulment procedure may be one or two transactions for the tokens of the first and second type respectively, and a new state. These three items may be written on a blockchain, such as the blockchain 210.

Both the create and annulment procedure may refuse to perform the create or annulment task if preconditions are not met. For example, the amount of crypto tokens of the first type available for an annulment request should be large enough, e.g., at least as large as the approximation. For example, the amount of crypto tokens of the second type available in the pool for an annulment request should be large enough.

Update procedure 223 may be called to change the shape of the bonding curve. Examples of update procedure 223 are given herein. The update procedure may verify if the new bonding curve is safe to use itself, but may also rely on the analysis of others, e.g., as evinced by an authentication token.

The update procedure 223 may just replace a bonding curve or curves. But update procedure 223 may also implement verification on the bonding curve, e.g., as described herein. The update procedure can be implemented on-chain in a smart contract or in chain software, which may be triggered. For example, it may be triggered by a governor of the system, e.g., as authenticated by one or more signatures. For example, it may be triggered automatically if certain conditions arise. For example, it may be triggered by the server devices, e.g., by a majority thereof.

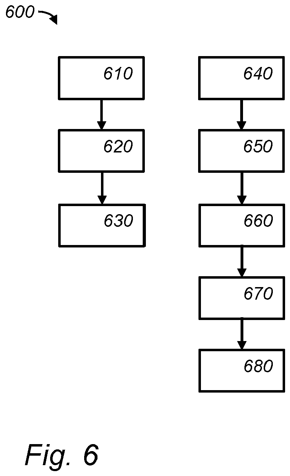

**Figure 6** schematically shows an example of an embodiment of a method 600 for determining a vulnerability in a new exchange function for use in a cryptocurrency system,

The cryptocurrency system itself supports various functions. For example, a method for maintaining crypto tokens of a first type, e.g., a first crypto currency, may comprise

- maintaining 610 a current supply size indicating a current number of crypto tokens of a first type,
- creating 620 a creation amount of crypto tokens of the first type in exchange for an amount of crypto tokens of a second type, a first creation exchange function being defined to compute the amount of crypto tokens of the second type dependent upon the current supply size and its increase with the creation amount of crypto tokens, and
- annulling 630 an annulling amount of crypto tokens of the first type in exchange for an amount of crypto tokens of the second type, a first annulling exchange function being defined to compute the amount of crypto tokens of the second type dependent upon the current supply size and its decrease with the annulling amount of crypto tokens,

There is a desire to update the exchange functions, in particular the annulment function in such systems. However, updating these important function is not without risk. Method 600 provides way to verify one such problem. Method 600 comprises

- obtaining 640 a second creation exchange function and a second annulling exchange function for replacing the first creation exchange function and the first annulling exchange function, the second creation exchange function and the second annulling exchange function having a spread between them,
- obtaining 650 a security parameter comprising a first attack amount of crypto tokens of the second type,
- computing 660 from the first exchange function an attack amount of crypto tokens of the first type obtainable in exchange for the first attack amount of crypto tokens of the second type according to the security parameter,
- computing 670 from the second annulling exchange function a second attack amount of crypto tokens of the second type obtainable in exchange for the computed attack amount of crypto tokens of the first type,
- comparing 680 the second attack amount of crypto tokens of the second type with the first attack amount of crypto tokens of the second type according to the security parameter, determining a vulnerability if the former exceeds the latter by more than a threshold.

Optionally, the method may comprise, obtaining a smart contract from a distributed ledger, the smart contract implementing a creation procedure for creating crypto tokens of the first type in exchange for crypto tokens of the second type and an annulling procedure for annulling crypto tokens of the first type in exchange for crypto tokens of the second type, the smart contract maintaining a current supply size indicating a current number of crypto tokens of the first type and a bonding curve defining a function. Obtaining a smart contract is optional as the creation procedure and annulment procedure may be implemented in other software as well.

For example, the method may be a computer implemented method. For example, obtaining the smart contract from a distributed ledger may comprise retrieving a block from a distributed ledger, e.g., over a computer network, or in a local database. Executing the smart contract may be done on a microprocessor. For example, the smart contract may be written in an interpretive language, which may be executed by an interpreter, a virtual machine, or the like. Integrating a curve may comprise executing computations, e.g., inserting a current supply and a new supply in a primitive, or antiderivative, of a bonding curve, a closed form integrant. Note that computing the first amount of first type tokens need not be done on chain. This can be a private computation, of which only the outcome is used. This is advantageous as computations on chain are slow and expensive, whereas private computation can use the full power of the computer. The outcome of the computation, e.g., the first amount of first type tokens that are to be created or annulled can be used as in a regular transaction.

Receiving a creation or annulment request may be over a computer network. Transferring first type tokens or second type tokens may comprise writing the transfer in a block for inclusion in a block of the distributed ledger. The block may comprise a consensus mechanism, e.g., a proof of work, or proof of stake.

Many different ways of executing the methods are possible, as will be apparent to a person skilled in the art. For example, the order of the steps can be performed in the shown order, but the order of the steps can be varied or some steps may be executed in parallel. Moreover, in between steps other method steps may be inserted. The inserted steps may represent refinements of the method such as described herein, or may be unrelated to the method. For example, some steps may be executed, at least partially, in parallel. Moreover, a given step may not have finished completely before a next step is started.

Embodiments of the method may be executed using software, which comprises instructions for causing a processor system to perform method 400. Software may only include those steps taken by a particular sub-entity of the system. The software may be stored in a suitable storage medium, such as a hard disk, a floppy, a memory, an optical disc, etc. The software may be sent as a signal along a wire, or wireless, or using a data network, e.g., the Internet. The software may be made available for download and/or for remote usage on a server. Embodiments of the method may be executed using a bitstream arranged to configure programmable logic, e.g., a field-programmable gate array (FPGA), to perform the method.

It will be appreciated that the presently disclosed subject matter also extends to computer programs, particularly computer programs on or in a carrier, adapted for putting the presently disclosed subject matter into practice. The program may be in the form of source code, object code, a code intermediate source, and object code such as partially compiled form, or in any other form suitable for use in the implementation of an embodiment of the method. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the devices, units and/or parts of at least one of the systems and/or products set forth.

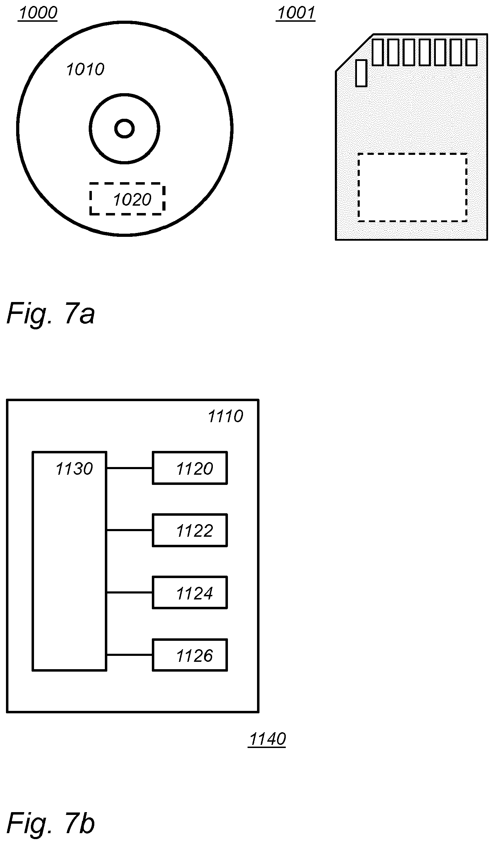

**Figure 7a** shows a computer readable medium 1000 having a writable part 1010, and a computer readable medium 1001 also having a writable part. Computer readable medium 1000 is shown in the form of an optically readable medium. Computer readable medium 1001 is shown in the form of an electronic memory, in this case a memory card. Computer readable medium 1000 and 1001 may store data 1020 wherein the data may indicate instructions, which when executed by a processor system, cause a processor system to perform an embodiment of a method of vulnerability in a replacement of the exchange function in a crypto token system. The processor system may also be configured to maintain the crypto token, according to an embodiment. The computer program 1020 may be embodied on the computer readable medium 1000 as physical marks or by magnetization of the computer readable medium 1000. However, any other suitable embodiment is conceivable as well. Furthermore, it will be appreciated that, although the computer readable medium 1000 is shown here as an optical disc, the computer readable medium 1000 may be any suitable computer readable medium, such as a hard disk, solid state memory, flash memory, etc., and may be non-recordable or recordable. The computer program 1020 comprises instructions for causing a processor system to perform said method.

**Figure 7b** shows in a schematic representation of a processor system 1140 according to an embodiment of a device for detecting vulnerability and/or maintaining a crypto token. The processor system comprises one or more integrated circuits 1110. The architecture of the one or more integrated circuits 1110 is schematically shown in Figure 7b. Circuit 1110 comprises a processing unit 1120, e.g., a CPU, for running computer program components to execute a method according to an embodiment and/or implement its modules or units. Circuit 1110 comprises a memory 1122 for storing programming code, data, etc. Part of memory 1122 may be read-only. Circuit 1110 may comprise a communication element 1126, e.g., an antenna, connectors or both, and the like. Circuit 1110 may comprise a dedicated integrated circuit 1124 for performing part or all of the processing defined in the method. Processor 1120, memory 1122, dedicated IC 1124 and communication element 1126 may be connected to each other via an interconnect 1130, say a bus. The processor system 1110 may be arranged for contact and/or contact-less communication, using an antenna and/or connectors, respectively.

For example, in an embodiment, processor system 1140, e.g., a device for maintaining a crypto token may comprise a processor circuit and a memory circuit, the processor being arranged to execute software stored in the memory circuit. For example, the processor circuit may be an Intel Core i7 processor, ARM Cortex-R8, etc. In an embodiment, the processor circuit may be ARM Cortex M0. The memory circuit may be an ROM circuit, or a non-volatile memory, e.g., a flash memory. The memory circuit may be a volatile memory, e.g., an SRAM memory. In the latter case, the device may comprise a non-volatile software interface, e.g., a hard drive, a network interface, etc., arranged for providing the software.

It should be noted that the above-mentioned embodiments illustrate rather than limit the presently disclosed subject matter, and that those skilled in the art will be able to design many alternative embodiments.

In the claims, any reference signs placed between parentheses shall not be construed as limiting the claim. Use of the verb 'comprise' and its conjugations does not exclude the presence of elements or steps other than those stated in a claim. The article 'a' or 'an' preceding an element does not exclude the presence of a plurality of such elements. Expressions such as "at least one of" when preceding a list of elements represent a selection of all or of any subset of elements from the list. For example, the expression, "at least one of A, B, and C" should be understood as including only A, only B, only C, both A and B, both A and C, both B and C, or all of A, B, and C. The presently disclosed subject matter may be implemented by hardware comprising several distinct elements, and by a suitably programmed computer. In the device claim enumerating several parts, several of these parts may be embodied by one and the same item of hardware. The mere fact that certain measures are recited in mutually different dependent claims does not indicate that a combination of these measures cannot be used to advantage.

In the claims references in parentheses refer to reference signs in drawings of exemplifying embodiments or to formulas of embodiments, thus increasing the intelligibility of the claim. These references shall not be construed as limiting the claim.

**Claims**

1. A method (600) for determining a vulnerability in a new exchange function for use in a cryptocurrency system,

- the cryptocurrency system supporting

- maintaining (610) a current supply size indicating a current number of crypto tokens of a first type,
- creating (620) a creation amount of crypto tokens of the first type (411) in exchange for an amount of crypto tokens of a second type, a first creation exchange function (410) being defined to compute the amount of crypto tokens of the second type (412) dependent upon the current supply size and its increase with the creation amount of crypto tokens, and
- annulling (630) an annulling amount of crypto tokens of the first type (421) in exchange for an amount of crypto tokens of the second type (422), a first annulling exchange function (420) being defined to compute the amount of crypto tokens of the second type dependent upon the current supply size and its decrease with the annulling amount of crypto tokens,

- the method comprising

- obtaining (640) a second creation exchange function and a second annulling exchange function (430) for replacing the first creation exchange function and the first annulling exchange function (420), the second creation exchange function and the second annulling exchange function having a spread between them,
- obtaining (650) an attack amount of crypto tokens of the first type (413) and a first attack amount of crypto tokens of the second type (414), wherein the attack amount of crypto tokens of the first type (413) can be obtained according to the first creation exchange function (410) in exchange for the first attack amount of crypto tokens of the second type (414),
- computing (670) from the second annulling exchange function (430) a second attack amount of crypto tokens of the second type (433) obtainable in exchange for the attack amount of crypto tokens of the first type (413), and
- comparing (680) the second attack amount of crypto tokens of the second type (433) with the first attack amount of crypto tokens of the second type (414), determining a vulnerability if the former exceeds the latter by more than a threshold.

2. A method (600) as in Claim 1, comprising

- obtaining (650) a security parameter comprising a first attack amount of crypto tokens of the second type (414),
- computing (660) from the first exchange function an attack amount of crypto tokens of the first type (413) obtainable in exchange for the first attack amount of crypto tokens of the second type according to the security parameter.

3. A method as in any one of the preceding claims, comprising

- if a vulnerability is determined, rejecting the second creation exchange function and second annulling exchange function, and optionally, determining a second creation exchange function and a second annulling exchange function until no vulnerability is determined, and/or
- if no vulnerability is determined, replacing the first creation exchange function and the first annulling exchange function with the second creation exchange function and second annulling exchange function.

4. A method as in any one of the preceding claims, comprising including a description of the second creation exchange function and/or second annulling exchange function in a block of a distributed ledger.

5. A method as in any one of the preceding claims, comprising

- determining the volume of crypto tokens of the second type in creation and/or annulling operations in a timeframe, and deriving the first attack amount of crypto tokens of the second type therefrom, and/or
- determining the volume of crypto tokens of the first type in creation and/or annulling operations in a timeframe, and deriving the first attack amount of crypto tokens of the second type therefrom.

6. A method as in any one of the preceding claims, wherein

- creating a creation amount of crypto tokens of the first type comprises transferring the amount of crypto tokens of a second type to a pool,
- annulling a creation amount of crypto tokens of the first type comprises transferring the amount of crypto tokens of a second type from a pool, and
- an amount of second type crypto tokens obtained by applying the second annulling exchange function to the current supply size when decreased to zero, is not more than the amount of second type crypto tokens in the pool.

7. A method as in any one of the preceding claims, wherein the

- second annulling exchange function exceeds the first annulling exchange function.

**8.** A method as in any one of the preceding claims, wherein

- if a vulnerability is determined, a third annulling exchange function is selected intermediate between the first annulling exchange function and the second annulling exchange function.

**9.** A method as in any one of the preceding claims, wherein

- the first creation exchange function comprises computing an integral over a first creating bonding curve from the current supply size to the current supply size plus the creation amount of crypto tokens of the first type, and/or
- the second creation exchange function comprises computing an integral over a second creating bonding curve from the current supply size to the current supply size plus the creation amount of crypto tokens of the first type, and/or
- the first annulling exchange function comprises computing an integral over a first annulling bonding curve from the current supply size minus the annulling amount of crypto tokens of the first type to the current supply size, and/or
- the second annulling exchange function comprises computing an integral over a second annulling bonding curve from the current supply size minus the annulling amount of crypto tokens of the first type to the current supply size, wherein
- obtaining a second creation exchange function and a second annulling exchange function comprises determining a second creating bonding curve and a second annulling bonding curve for replacing the first creating bonding curve and the first annulling bonding curve.

**10.** A method as in Claim 9, wherein

- a creation exchange bonding curve and an annulling exchange bonding curve are derived from a bonding curve, as a sum of the bonding curve ($\Gamma(x)$) and a number of further terms, for at least one of the creation and annulling procedures the further terms including a fee term.

**11.** A method as in any one of Claims 9 and 10, wherein the bonding curve is defined by parameters, e.g., splines, line segments, polynomials, polynomial segments, and wherein integration over the bonding curve or over a creating bonding curve derived from the bonding or over an annulling bonding curve derived from the bonding curve, is computed by applying a function to the parameters.

**12.** A method for maintaining crypto tokens of a first type comprising,

- maintaining a current supply size indicating a current number of crypto tokens of a first type,
- creating a creation amount of crypto tokens of the first type in exchange for an amount of crypto tokens of a second type, a first creation exchange function being defined to compute the amount of crypto tokens of the second type dependent upon the current supply size and its increase with the creation amount of crypto tokens,
- annulling an annulling amount of crypto tokens of the first type in exchange for an amount of crypto tokens of the second type, a first annulling exchange function being defined to compute the amount of crypto tokens of the second type dependent upon the current supply size and its decrease with the annulling amount of crypto tokens, and
- replacing the first creation exchange function with a second creation exchange function and/or the first annulling exchange function with a second annulling exchange function determined not to have a vulnerability according to any one of claims 1-11.

**13.** A method as in any one of the preceding claims, comprising obtaining (510) a smart contract from a distributed ledger, the smart contract implementing at least part of the method.

**14.** Server device for determining a vulnerability in a new exchange function for use in a cryptocurrency system, the server device comprising

- a communication interface configure to obtain instructions for a new exchange functions in a cryptocurrency system,
- the cryptocurrency system supporting

    - maintaining a current supply size indicating a current number of crypto tokens of a first type,

- creating a creation amount of crypto tokens of the first type in exchange for an amount of crypto tokens of a second type, a first creation exchange function being defined to compute the amount of crypto tokens of the second type dependent upon the current supply size and its increase with the creation amount of crypto tokens,
- annulling an annulling amount of crypto tokens of the first type in exchange for an amount of crypto tokens of the second type, a first annulling exchange function being defined to compute the amount of crypto tokens of the second type dependent upon the current supply size and its decrease with the annulling amount of crypto tokens, and

- a processor system configured to execute

- obtaining (640) a second creation exchange function and a second annulling exchange function (430) for replacing the first creation exchange function and the first annulling exchange function (420), the second creation exchange function and the second annulling exchange function having a spread between them,
- obtaining (650) an attack amount of crypto tokens of the first type (413) and a first attack amount of crypto tokens of the second type (414), wherein the attack amount of crypto tokens of the first type (413) can be obtained according to the first creation exchange function (410) in exchange for the first attack amount of crypto tokens of the second type (414),
- computing (670) from the second annulling exchange function (430) a second attack amount of crypto tokens of the second type (433) obtainable in exchange for the attack amount of crypto tokens of the first type (413), and
- comparing (680) the second attack amount of crypto tokens of the second type (433) with the first attack amount of crypto tokens of the second type (414), determining a vulnerability if the former exceeds the latter by more than a threshold.

15. Server device for maintaining crypto tokens of a first type, the server device comprising

- a communication interface configured to receive creation and/or annulling transactions for crypto tokens of a first type, and
- a processor system configured for

- creating a creation amount of crypto tokens of the first type in exchange for an amount of crypto tokens of a second type, a first creation exchange function being defined to compute the amount of crypto tokens of the second type dependent upon the current supply size and its increase with the creation amount of crypto tokens,
- annulling an annulling amount of crypto tokens of the first type in exchange for an amount of crypto tokens of the second type, a first annulling exchange function being defined to compute the amount of crypto tokens of the second type dependent upon the current supply size and its decrease with the annulling amount of crypto tokens, and
- replacing the first creation exchange function with a second creation exchange function and/or the first annulling exchange function with a second annulling exchange function determined not to have a vulnerability according to any one of claims 1-13.

16. Client device for maintaining crypto tokens of a first type, the client device comprising

- a communication interface configured to send a request for creating or annulling an amount of crypto tokens of the first type, and
- a processor system configured to

- maintain a wallet with crypto tokens of the second type, and to transfer or receive an amount of crypto tokens of the second type to or from a pool,
- maintain a wallet with crypto tokens of the first type, and to transfer or receive an amount of crypto tokens of the first type, wherein

- the amount of crypto tokens of the second type for the exchange being computed by an exchange function dependent upon the current supply size and its increase with the creation amount of crypto tokens, wherein the exchange function is replaceable with a new exchange function determined not to have a vulnerability according to any one of claims 1-13.

**17.** A transitory or non-transitory computer readable medium (1000) comprising data (1020) representing instructions, which when executed by a processor system, cause the processor system to perform the method according to any one of claims 1-13.

110

130

140

150

*Fig. 1a*

160

170

180

190

162

*Fig. 1b*

100

110.1

110.2

172

160.1

160.2

*Fig. 1c*

411 → 410 → 412

*Fig. 2a*

421 → 420 → 422

*Fig. 2b*

413 ← 410 ← 414

413 → 430 → 433

440

*Fig. 2c*

*Fig. 2d*

*Fig. 3a*

*Fig. 3b*

Fig. 3c

Fig. 4

*Fig. 5*

*600*

610

620

630

640

650

660

670

680

*Fig. 6*

_1000_

_1001_

_1010_

_1020_

## Fig. 7a

_1110_

_1130_

_1120_

_1122_

_1124_

_1126_

_1140_

## Fig. 7b

Europäisches
Patentamt

European
Patent Office

Office européen
des brevets

# EUROPEAN SEARCH REPORT

**Application Number**

EP 22 15 1007

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/279321 A1 (WANG DONG [HK]) 3 September 2020 (2020-09-03) * paragraph [0061] – paragraph [0143] * * figures * | 1-17 | INV. G06Q20/06 G06Q40/04 |
| X | US 2021/027281 A1 (KILROE JAMES ALEXANDER GIBSON [ZA] ET AL) 28 January 2021 (2021-01-28) * paragraph [0011] – paragraph [0071] * * paragraph [0089] – paragraph [0212] * * figures * | 1-17 | |
| A | US 10 373 158 B1 (JAMES DANIEL WILLIAM HALLEY [US] ET AL) 6 August 2019 (2019-08-06) * column 28, line 10 – column 189, line 60 * * figures * | 1-17 | |
| A | WO 2018/060951 A1 (OMAR RUZAIQ [ZA]; KALLA ABDOOL GANI ANVER [ZA]) 5 April 2018 (2018-04-05) * page 21 – page 41 * * figures * | 1-17 | TECHNICAL FIELDS SEARCHED (IPC) G06Q |
| A | US 2019/080407 A1 (MOLINARI VINCENT [US] ET AL) 14 March 2019 (2019-03-14) * paragraph [0071] * | 1-17 | |

The present search report has been drawn up for all claims

| Place of search | Date of completion of the search | Examiner |
|---|---|---|
| The Hague | 17 June 2022 | Rachkov, Vassil |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 15 1007

This annex lists the patent family members relating to the patent documents cited in the above-mentioned European search report.
The members are as contained in the European Patent Office EDP file on
The European Patent Office is in no way liable for these particulars which are merely given for the purpose of information.

17-06-2022

| Patent document cited in search report | | Publication date | Patent family member(s) | | Publication date |
|---|---|---|---|---|---|
| US 2020279321 | A1 | 03-09-2020 | NONE | | |
| US 2021027281 | A1 | 28-01-2021 | US | 2021027281 A1 | 28-01-2021 |
| | | | WO | 2019043668 A1 | 07-03-2019 |
| US 10373158 | B1 | 06-08-2019 | US | 10373158 B1 | 06-08-2019 |
| | | | US | 10540653 B1 | 21-01-2020 |
| WO 2018060951 | A1 | 05-04-2018 | NONE | | |
| US 2019080407 | A1 | 14-03-2019 | US | 2019080402 A1 | 14-03-2019 |
| | | | US | 2019080404 A1 | 14-03-2019 |
| | | | US | 2019080405 A1 | 14-03-2019 |
| | | | US | 2019080406 A1 | 14-03-2019 |
| | | | US | 2019080407 A1 | 14-03-2019 |
| | | | US | 2019188793 A1 | 20-06-2019 |
| | | | US | 2019197622 A1 | 27-06-2019 |
| | | | WO | 2019051401 A1 | 14-03-2019 |
| | | | WO | 2019051449 A1 | 14-03-2019 |
| | | | WO | 2019051451 A1 | 14-03-2019 |

EPO FORM P0459

For more details about this annex : see Official Journal of the European Patent Office, No. 12/82

**REFERENCES CITED IN THE DESCRIPTION**

**Patent documents cited in the description**

- WO 2019043668 A1


**Non-patent literature cited in the description**

- **G. WOOD.** Ethereum: a secure decentralised generalised transaction ledger. *the Istanbul version 80085f7,* 11 July 2021